# EUROPEAN PATENT APPLICATION

(11) **EP 4 362 536 A1**
(43) Date of publication of application: **01.05.2024**
(21) Application number: 21946340.3
(22) Date of filing: 22.06.2021
(51) Int. Cl.: H04W 24/08, H04W 36/00

(54) **CELL MEASUREMENT METHOD, CELL MEASUREMENT CONFIGURATION METHOD AND APPARATUS, DEVICE, AND MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Gunzelmann, Rainer
(86) International application number: PCT/CN2021/101492
(87) International publication number: WO 2022/266838

(57) **Abstract**

Embodiments of the present disclosure provide a cell measurement method, a cell measurement configuration method and apparatus, a device, and a medium. The cell measurement method is performed by a user equipment (UE), and the method comprises: determining a second cell from among first cells, the first cells being cells the UE must measure in performing mobility management; and stopping measurement of the second cell.

## Description

### TECHNICAL FIELD

The disclosure relates to the wireless communication technical field but is not limited to the wireless communication technical field, in particular to a cell measurement method, a cell measurement configuration method, a cell measurement apparatus, a cell measurement configuration apparatus, a communication device and a storage medium.

### BACKGROUND

During a mobility management process of a New Radio (NR) system, a User Equipment (UE) needs to measure all cells in a configured list of cells. The UE may be far away from some cells in the list during a moving process. These cells may not be treated as potential target cells for handover. The UE may perform measurement on these cells, which may affect mobility management performance and increase power consumption generated during the measurement of the UE. Therefore, in order to further improve the mobility management performance and save the power consumption of the UE, it is necessary to study the mobility management methods and measurement requirements of the UE in various mobility scenarios.

### SUMMARY

Embodiments of the disclosure provide a cell measurement method, a cell measurement configuration method, a cell measurement apparatus, a cell measurement configuration apparatus, a communication device and a storage medium.

A first aspect of embodiments of the disclosure provides a cell measurement method, performed by a user equipment (UE), including:
determining a second cell from a plurality of first cells, in which the plurality of first cells are cells to be measured for the UE to perform mobility management; and stopping measurement of the second cell.

A second aspect of embodiments of the disclosure provides a cell measurement configuration processing method, performed by a base station, including:
sending a measurement configuration, in which the measurement configuration is used for cell measurement of mobility management of a UE; in which
the measurement configuration at least includes a first configuration;
the first configuration includes: a threshold configuration and/or a timing configuration, the threshold configuration is used for the UE to determine a second cell whose measurement is to be stopped from a plurality of first cells, and the plurality of first cells are cells to be measured for the UE to perform the mobility management; and
the timing configuration is configured to determine a time period during which the measurement of the second cell is stopped.

A third aspect of embodiments of the disclosure provides a cell measurement apparatus, including:
a determining module, configured to determine a second cell from a plurality of first cells, in which the plurality of first cells are cells to be measured for a UE to perform mobility management; and
a stopping module, configured to stop measurement of the second cell.

A fourth aspect of embodiments of the disclosure provides a cell measurement configuration processing apparatus, including:
a sending module, configured to send a measurement configuration, in which the measurement configuration is used for cell measurement of mobility management of a UE; in which
the measurement configuration at least includes a first configuration;
the first configuration includes: a threshold configuration and/or a timing configuration, the threshold configuration is used for the UE to determine a second cell whose measurement is to be stopped from a plurality of first cells, and the plurality of first cells are cells to be measured for the UE to perform mobility management; and
the timing configuration is used to determine a time period during which the measurement of the second cell is stopped.

A fifth aspect of embodiments of the disclosure provides a communication device including a processor, a transceiver, a memory and executable programs stored on the memory and executable by the processor. When the executable programs are executed by the processor, the cell measurement method according to the first aspect or the cell measurement configuration processing method according to the second aspect is implemented.

A sixth aspect of embodiments of the disclosure provides a computer storage medium having executable programs stored thereon. When the executable programs are executed by a processor, the cell measurement method according to the first aspect or the cell measurement configuration processing method according to the second aspect is implemented.

According to the technical solutions of the embodiments of the disclosure, the UE may select the second cell that does not need to be measured from the cells that are to be measured for performing the mobility management, rather than directly measuring all the first cells without filtering, thereby reducing unnecessary measurement of first cells that do not need to be measured. Therefore, power consumption generated by measuring these cells that do not need to be measured is reduced, a standby time of the UE is extended, and the measurement performance of the mobility management is improved.

It should be understood that the above general description and the following detailed descriptions are exemplary and explanatory only and do not limit the embodiments of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the embodiments of the disclosure.
FIG. 1 is a schematic diagram of a wireless communication system according to an exemplary embodiment.
FIG. 2 is a flowchart of a cell measurement method according to an exemplary embodiment.
FIG. 3 is a flowchart of a cell measurement method according to an exemplary embodiment.
FIG. 4 is a flowchart of a cell measurement configuration processing method according to an exemplary embodiment.
FIG. 5 is a flowchart of a cell measurement configuration processing method according to an exemplary embodiment.
FIG. 6 is a block diagram of a cell measurement apparatus according to an exemplary embodiment.
FIG. 7 is a block diagram of a cell measurement configuration processing apparatus according to an exemplary embodiment.
FIG. 8 is a schematic diagram of a UE according to an exemplary embodiment.
FIG. 9 is a schematic diagram of a communication device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

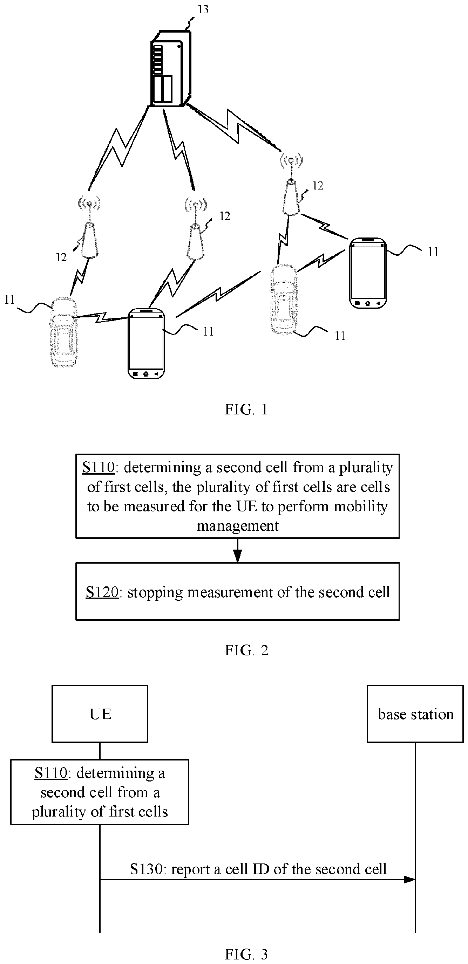

FIG. 1 is a schematic diagram of a wireless communication system according to an embodiment of the disclosure. As illustrated in FIG. 1, the wireless communication system is a communication system based on the cellular mobile communication technology. The wireless communication system may include: a plurality of user equipments (UEs) 11 and a plurality of access devices 12.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a cell phone (or "cellular" phone), and a computer with having the IoT UE. For example, the UE 11 may be a stationary, portable, pocket-sized, handheld, computer-built in, or vehicle-mounted device, such as, a station (STA), a subscriber unit, a subscriber station, a mobile station, a mobile, a remote station, an access point, a remote terminal, an access terminal, a user terminal, a user agent, a user device, or a UE. Alternatively, the UE 11 may be an unmanned aerial vehicle device. Alternatively, the UE 11 may be an in-vehicle device, for example, an Electronic Control Unit (ECU) having wireless communication function, or a wireless communication device externally connected to the ECU. Alternatively, the UE 11 can also be a roadside device, such as a street light, a signal light, or other roadside devices having the wireless communication function.

The access device 12 may be a network side device in the wireless communication system. The wireless communication system may be the 4th Generation (4G) mobile communication system, also known as a Long Term Evolution (LTE) system. Alternatively, the wireless communication system may also be a 5G system, also known as a New Radio (NR) system or a 5G NR system. Alternatively, the wireless communication system may be any nextgeneration system of the 5G system. The access network in the 5G system may be called a New Generation-RAN (NG-RAN) or a machine type communication (MTC) system.

The access device 12 can be an evolved base station (eNB) employed in the 4G system. Alternatively, the access device 12 may be a base station (gNB) using a centralized distributed architecture in the 5G system. When the access device 12 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, and a Media Access Control (MAC) layer. The DU is equipped with a protocol stack of a physical (PHY) layer, and the specific implementation of the access device 12 is not limited in the embodiments of this disclosure.

A wireless connection can be established between the access device 12 and the UE 11 via a radio interface. In different implementations, the radio interface is a radio interface based on the 4G standard. Alternatively, the radio interface is a radio interface based on the 5G standard, for example, the radio interface is a NR. Alternatively, the radio interface may be a radio interface based on a mobile communication standard of the next generation of the 5G.

In some embodiments, an End to End (E2E) connection may be established between the UEs 11, for example, Vehicle to Vehicle (V2V) communication, Vehicle to Infrastructure (V2I) communication, and Vehicle to Pedestrian (V2P) communication in the Vehicle to Everything (V2X) communication scenario.

In some embodiments, the above wireless communication system may also include a network management device 13.

The plurality of access devices 12 are connected to the network management device 13 respectively. The network management device 13 may be a core network device in the wireless communication system, for example, a Mobility Management Entity (MME) in an Evolved Packet Core (EPC) network. Alternatively, the network management device may be other core network devices, such as a Serving Gate Way (SGW), a Public Data Network Gate Way (PGW), a Policy and Charging Rules Function (PCRF), or a Home Subscriber Server (HSS), etc. The implementation form of the network management device 13 is not limited in the embodiments of the disclosure.

As illustrated in FIG. 2, a cell measurement method, performed by a UE, is provided in the embodiment of the disclosure. The method includes the following steps.

S 110, a second cell is determined from a plurality of first cells, in which the plurality of first cells are cells to be measured for the UE to perform mobility management.

S 120, measurement of the second cell is stopped.

The UE may be a mobile terminal. For example, the UE includes but is not limited to at least one of:
a cell phone, a tablet computer, a vehicle-mounted terminal and/or a smart device. The smart device includes, but is not limited to, various robots that can move on the ground, such as, vending robots, guide robots in parks, or shopping guide robots in large shopping malls.

In an embodiment, the first cell may be a cell whose cell identification (ID) is located in a cell list. The cell list may be configured by a base station for the UE to perform measurements required for mobility management.

In another embodiment, the first cell may include: a serving cell where the UE is located currently and a cell whose cell ID is located in a list of neighbor cells.

In an embodiment of the disclosure, the cell ID of the first cell and/or the cell ID of the second cell may include: a cell ID number of a corresponding cell. For example, the cell ID number includes, but is not limited to, a Physical Cell Identity (PCI).

In the embodiment of the disclosure, when performing cell measurement, the UE may no longer measure all the first cells directly, but may determine whether there is any second cell that does not need to be measured from the first cells. If there is the second cell that does not need to be measured, the UE does not measure the second cell (i.e., the measurement of the second cell is stopped), and the UE only measures the remaining first cells other than the second cell.

In the embodiment of the disclosure, the second cell may be a first cell from which the UE has moved away or is moving away.

For example, the UE is mobile and is able to move around in different locations. Therefore, the UE may move close to or move away from a certain cell based on its own mobility. The first cells may be classified into a first cell and a third cell, and a distance between the first cell and the UE may be greater than a distance between the third cell and the UE. Moreover, the third cell may be a cell with a higher probability of being a target cell during handover of the UE, and the second cell may be a cell with a lower probability of being the target cell during the handover of the UE. In view of this, the second cell may be a cell which is not currently required to be measured for the UE to continue to perform the mobility management. The third cell may be remaining first cells other than the second cell.

In the embodiment of the disclosure, cell measurement refers to measuring a reference signal transmitted by a cell. The reference signal includes but are not limited to at least one of:
a Synchronization Signal/PBCH block (SSB), in which PBCH is the abbreviation of Physical Broadcast Channel; and
a Channel status information-reference signal (CSI-RS).

Certainly, the above are only examples of reference signals measured in cell measurement, and specific implementation is not limited to the above examples. For example, the reference signal may also include: a demodulation reference signal.

In the embodiment of the disclosure, the UE stops the measurement of the second cell, so that the power consumption generated by the measurement of the second cell of the UE can be reduced, and the standby time of the UE can be extended.

In some embodiments, the S110 includes at least one of:
selecting the second cell from the first cells according to L consecutive reference signal measurement values of each first cell, in which L is a positive integer; or
selecting a first cell having a distance with the UE greater than a distance threshold value as the second cell, according to location information of the plurality of first cells and location information of the UE.

There are many ways to determine the second cell from the plurality of first cells. Two optional ways are provided above, and the specific implementation is not limited to the above two ways.

The UE may measure a first cell at different locations in a time domain according to a measurement configuration, to obtain the reference signal measurement values of the first cell. In the embodiment of the disclosure, the UE may at least record the reference signal measurement values obtained from the most recent L measurements, which can be used to determine the second cell when selecting the second cell. The reference signal measurement values obtained from L consecutive measurements are the aforementioned L consecutive reference signal measurement values.

For example, the reference signal measurement value may include: Reference Signal Received Power (RSRP), Reference Signal Received Quality (RSRQ), and a Reference Signal-Signal to Interference plus Noise Ratio (RS-SINR).

The value of L is a positive integer, and the specific value can be 1, 2 or 3.

The closer the UE is to a cell, the larger a measurement value (i.e., the reference signal measurement value) of a reference signal measured by the UE under an ideal condition without blocking is. Otherwise, the farther the UE is to a cell, the smaller the reference signal measurement value is. In view of this, one or more second cells can be easily selected from the first cells based on the reference signal measurement values obtained from historical measurements of the first cells in a case that the UE does not need to be located.

For example, if the L consecutive reference signal measurement values of a certain cell are all very small, the cell can be determined as the second cell. Alternatively, if the L reference signal measurement values obtained by L consecutive measurements of a certain cell descend successively in a time order, the cell can also be determined as the second cell.

Certainly, a situation cannot be ruled out where the UE's current mobility is relatively small, and therefore there may be no second cell in the first cells. At this point, the UE may continue to measure all the first cells.

In other embodiments, the UE may locate itself or receive its own location information from other devices, to obtain its location information. The location information of the first cell (i.e., the location information of the cell) may be sent through a measurement configuration or a cell configuration. Therefore, the UE may obtain a distance between each first cell and the UE by performing distance calculation based on the location information of the UE and the location information of the first cell, and then determines the first cell whose distance from the UE is greater than the distance threshold value as the second cell.

The location information of the UE includes, but is not limited to, latitude and longitude information of the UE. The location information of the first cell includes, but is not limited to: latitude and longitude information of the location of a base station of the first cell, or, latitude and longitude information of a center point of the first cell.

Positioning the UE includes: positioning via systems such as Global Position System (GPS) and BeiDou Positioning System, and/or, positioning by transmitting ranging signals with the base station. For example, the UE determines a relative location between the UE and the base station by transmitting and receiving ranging signals with the base station, and then determines the location information of the UE according to the relative location in combination with the location information of the base station.

In some embodiments, determining the second cell from the plurality of first cells further includes:
determining a first cell whose distance from the UE is greater than a distance threshold value and the distance shows a trend of further increase as the second cell, according to the location information of the first cell and the location information of the UE. In this way, not only a first cell that is far enough away from the UE can be selected as the second cell, but also a first cell that the UE is further away from can be selected as the second cell, thereby ensuring the accuracy of the selected second cell that does not need to be measured.

In some embodiments, the method further includes:
determining whether the UE turns on a positioning function; and
if the UE turns on the positioning function, selecting the second cell from the first cells according to a selection method based on the location information of the UE; and/or, if the UE does not turn on the positioning function, selecting the second cell from the first cells according to a selection method based on the reference signal measurement values of the first cells of the UE.

The first cell whose distance from the UE is greater than the distance threshold value is selected as the second cell according to the location information of the first cell and the location information of the UE, and/or, the first cell whose distance from the UE is greater than the distance threshold value and the distance shows a trend of further increase is selected as the second cell according to the location information of the first cell and the location information of the UE. This is the aforementioned selecting the second cell from the first cells according to the selection method based on the location information of the UE.

Selecting the second cell from the first cells according to the selection method based on the reference signal measurement values of the first cells of the UE may at least includes the aforementioned way of selecting the second cell from the first cells according to the L consecutive reference signal measurement values of each first cell.

In some embodiments, selecting the second cell from the plurality of first cells according to the L consecutive reference signal measurement values of each first cell includes at least one of:
determining a first cell whose L consecutive reference signal measurement values are all less than a non-measurement threshold value as the second cell; or
determining a first cell whose reference signal measurement value obtained by a latest measurement in the L consecutive reference signal measurement values is less than the non-measurement threshold value and whose L consecutive reference signal measurement values show a descending trend as the second cell.

In an embodiment, if all the L consecutive reference signal measurement values of the same first cell are less than the non-measurement threshold value, it means that the first cell is already far away from the UE or the first cell is currently malfunctioned and not suitable to be accessed by the UE. Thus, the UE can determine the first cell as the second cell whose measurement is to be stopped without further measurement.

In another embodiment, in order to ensure the accuracy of determining the second cell by the UE, if the reference signal measurement value obtained by the latest measurements (the current measurement) in the L consecutive reference signal measurement values is less than the non-measurement threshold value and the L consecutive reference signal measurement values show a descending trend, it means that the UE is getting farther away from the corresponding first cell, and thus the first cell can be determined as the second cell. Since the reference signal measurement value of the first cell obtained at the current measurement is dropped to the non-measurement threshold value, and the reference signal measurement values obtained from the L-1 measurements prior to the current measurement show a descending trend, the first cell is determined as the second cell. Thus, the first cell that does not need to be further measured by the UE can be determined much faster, to reduce unnecessary measurements as many as possible. Therefore, in the embodiment, if the reference signal measurement value obtained by the latest measurement in the L consecutive reference signal measurement values is less than the non-measurement threshold value, but the L consecutive reference signal measurement values show a non-descending trend such as an ascending trend, the first cell cannot be determined as the second cell.

In an embodiment, a method is provided. The method includes the following steps.

**S**110, a second cell is selected from a plurality of first cells.

S130, a cell ID of the second cell is reported.

Reporting the cell ID of the second cell may be implemented independently of the aforementioned step of stopping the measurement of the second cell, or may be implemented in combination with the step of stopping the measurement of the second cell.

If reporting the cell ID of the second cell is implemented in combination with the step of stopping the measurement of the second cell, S120 and S130 are not executed in a certain order of precedence, i.e., S120 may be executed before S130, or, S130 may be executed before S120.

In an embodiment, the cell ID of the second cell may at least indicate to the base station the second cell whose measurement is stopped by the UE. In this way, the base station may know the cell whose measurement is suspended by the UE.

In another embodiment, the cell ID of the second cell is configured to trigger the base station to update the first cells of the UE. If the UE reports a cell ID of at least one second cell, the base station may determine that the UE moves a long distance and the first cells defined by the original cell list may no longer be suitable to the current UE, and thus the first cells of the UE may be updated. In this case, the base station may update the first cells of the UE.

For example, after receiving the cell ID of the second cell reported by the UE, the base station may determine that an update condition is satisfied and may update the first cells of the UE. Alternatively, the base station may determine that the update condition is satisfied and update the first cells of the UE after receiving a number of second cells reported by the UE which take a preset proportion of the first cells originally configured for the UE.

In this way, the UE can receive the first cells suitable for its current location in time, to realize effective measurement of the first cells, and thus an optimal cell or a more suitable cell can be selected for handover from a resident cell of the UE.

If the network side updates the first cells of the UE in time, the cell measurement performance of the UE can be improved overall.

In an embodiment, S120 may include:
stopping the measurement of the second cell within a timing range of a non-measurement timer.

In the embodiment of the disclosure, the UE simply stops the measurement of the second cell within the timing range of the non-measurement timer. In this way, if the non-measurement timer has expired when the UE moves again to the vicinity of the corresponding second cell within the time period in which the UE stops the measurement of the second cell, the UE may restore the measurement of the second cell.

In the embodiment of the disclosure, one second cell may correspond to one non-measurement timer. A starting moment of the non-measurement timer may be: a moment when the UE detects the second cell, or, a moment when the UE determines to stop the measurement of the corresponding second cell.

In another embodiment, a timing duration of the non-measurement timer may be configured by the network side or may be determined by the UE itself.

For example, the UE may determine the timing duration of the non-measurement timer in one of the following ways:
generating a random value based on a randomized algorithm, and determining the timing duration of the non-measurement timer according to the random value;
determining the timing duration of the non-measurement timer according to a current movement state of the UE. For example, the current movement state of the UE may be reflected by a current movement rate and a current movement direction of the UE, and if the UE moves in a direction opposite to the second cell, the current movement rate is positively correlated with the timing duration of the non-measurement timer;
determining the timing duration of the non-measurement timer according to historical movement states of the UE. The historical movement states reflect a movement range and/or a movement rate of the UE, etc., and may be used to estimate the current timing duration of the non-measurement timer; or
determining the timing duration of the non-measurement timer according to historical values of the timing duration of the non-measurement timer.

In conclusion, there are various ways of determining the timing duration of the non-measurement timer, which are not limited to any of the above ways.

In an embodiment, the method further includes:
determining that the non-measurement timer has expired and no updated first cell is received, and restoring the measurement of the second cell.

If there is no updated first cell received within the timing range of the non-measurement timer, it means that the network side does not update the first cells of the UE yet. Then, after the non-measurement timer has expired, the measurement of the corresponding second cell is restored, to facilitate the UE, when the UE moves to the vicinity of the second cell again, to determine the second cell as a target cell or a candidate cell of the target cell according to a reference signal measurement value of the second cell through the measurement of the second cell when there is handover based on the resident cell.

In an embodiment, if the updated first cell is received within the timing range of the non-measurement timer, the non-measurement timer stops timing and it is directly determined that no further measurements is performed on the corresponding second cell. Further, the UE may perform cell measurement according to the updated first cells.

In some embodiments, the method includes:
reporting a measurement result and a cell ID of a first cell whose reference signal measurement value is greater than or equal to a report threshold value, in which the report threshold value is greater than the non-measurement threshold value.

If the UE obtains at least one first cell whose reference signal measurement value is greater than or equal to the report threshold value, it indicates that there is a cell more suitable to be accessed by the UE nearby, and thus the UE may report the cells with good signal measurement values to the base station, and report measurement results of these good signal measurement values to the base station. In this way, the base station may, according to the reported measurement result and/or a load of the network side, etc., indicate the UE whether or not to switch to the first cell whose reference signal measurement value is greater than or equal to the report threshold value.

The measurement result includes but is not limited to one of the following information:

first information, which is indication information for indicating that the reference signal measurement value corresponding to the first cell is greater than or equal to the report threshold value; or
the reference signal measurement value obtained by the measurement.

In the embodiment of the disclosure, in order to reduce unnecessary interactions between the UE and the base station, the UE may report the cell ID of the second cell, the measurement result and the cell ID of the first cell to the base station via a single signaling. In this way, after receiving the signaling, the base station not only knows whether there is a first cell more suitable for the UE to access, but also knows the second cell that is no longer suitable for the UE to measure. If the update condition of the first cells of the UE is satisfied, the base station may be triggered to update the first cells of the UE after receiving the cell ID of the second cell, and deliver the cell IDs of the updated first cells to the UE. Therefore, the UE may receive the cell IDs of the updated first cells from the network side in time.

If the update condition of the first cells of the UE is not satisfied, the base station may not update the first cells of the UE after receiving the cell ID of the second cell.

In some embodiments, the method further includes:
receiving a measurement configuration, in which the measurement configuration at least includes: a first configuration.

The first configuration includes: a threshold configuration and/or a timing configuration. The threshold configuration is configured to determine the second cell, and the timing configuration is configured to determine a time period during which the measurement of the second cell is stopped.

In the embodiment of the disclosure, the measurement configuration may be configuration information used by a cell to be measured for the UE to perform mobility management. The measurement configuration may be received in any signaling of the base station before executing the S 110. For example, the measurement configuration may be issued via a radio resource control (RRC) signaling.

In some embodiments, the measurement configuration may also be issued via a Media Access Control Control Element (MAC CE), or Downlink Control Information (DCI).

The first configuration may include: a configuration for determining the second cell and/or a configuration for stopping the measurement of the second cell.

For example, the configuration for determining the second cell may include the threshold configuration. The configuration for stopping the measurement of the second cell may at least include the timing configuration.

The threshold configuration provides one or more threshold values for determining the second cell.

The timing configuration may be used to determine a duration in which the measurement of the second cell is stopped.

In some embodiments, the configuration for determining the second cell may further include: a trigger event configuration. For example, if a reference signal of a first cell is not detected within a preset time period, it may be determined that a trigger event defined by the trigger event configuration is satisfied, and the corresponding first cell may be determined as the second cell.

Therefore, in S110, the second cell may be selected from the first cells according to the configuration for determining the second cell. Correspondingly, S120 may include: stopping the measurement of the second cell according to the configuration for stopping the measurement of the second cell. In conclusion, in the embodiment of the disclosure, the UE may select the second cell from the first cells according to the first configuration and stop the measurement of the second cell.

In some embodiments, the threshold configuration indicates the non-measurement threshold value and/or the distance threshold value for determining the second cell. The non-measurement threshold value may be used by the UE to determine the second cell according to the reference signal measurement value of the first cell. The distance threshold value may be used by the UE to determine the second cell of which the measurement is to be stopped according to the location information of the UE and the location information of each first cell.

In some embodiments, the timing configuration indicates timing information of the non-measurement timer, in which the UE stops the measurement of the second cell during a timing period of the non-measurement timer.

The timing period of the non-measurement timer is a period during which the non-measurement timer is running.

In some embodiments, the measurement configuration further includes: a second configuration.

The second configuration includes a cell list, and the cell list includes cell IDs of the plurality of first cells.

The second configuration may be a configuration of the first cells. The second configuration may allow the UE to determine which cell is to be measured for performing the mobility management.

For example, the second configuration may include: a cell list, the cells indicated by the cell IDs contained in the cell list are the first cells.

In the embodiment of the disclosure, the measurement configuration may include both the first configuration and the second configuration. In this way, by receiving the measurement configuration, the UE may be aware of the predetermined cells to be measured for performing the mobility management, and also be aware of how to select the second cell from the first cells and how to carry out the stopping of the measurement of the second cell.

An initial configuration of the measurement configuration can be sent via a RRC signaling. In some embodiments, the reporting of the cell ID of the second cell triggers the base station to update the first cells, thus the UE may receive the updated second configuration separately issued through more dynamic signaling such as MAC CE or DCI, thereby realizing timely update of the first cells of the UE. Certainly, in some cases, a separate second configuration may be carried in the RRC signaling.

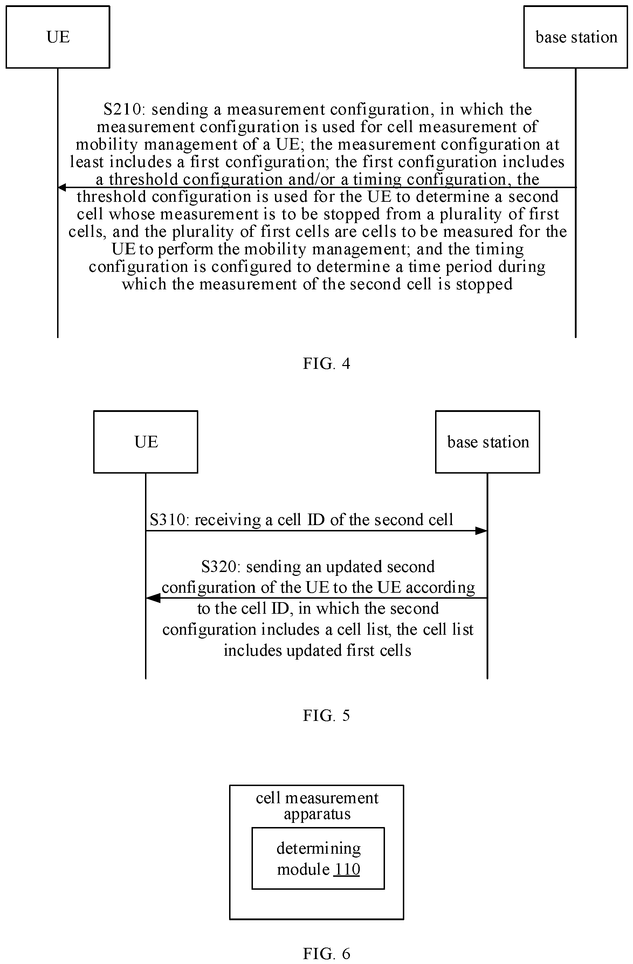

As illustrated in FIG. 4, a cell measurement configuration processing method is provided in the embodiment of the disclosure. The method includes the following steps.

S210, a measurement configuration is sent, in which the measurement configuration is used for cell measurement of mobility management of a UE; the measurement configuration at least includes a first configuration; the first configuration includes: a threshold configuration and/or a timing configuration, the threshold configuration is used for the UE to determine a second cell whose measurement is to be stopped from a plurality of first cells, and the plurality of first cells are cells to be measured for the UE to perform mobility management.

The timing configuration is configured to determine a time period during which the measurement of the second cell is stopped.

The cell measurement configuration processing method may be performed by a base station.

The measurement configuration is used for cell measurement of the UE.

In the embodiment of the disclosure, the measurement configuration at least includes a first configuration. The first configuration includes: a configuration for determining a second cell from the plurality of first cells, and/or, a configuration for stopping a measurement of the second cell.

By issuing the measurement configuration including the first configuration, the UE can select the second cell from the first cells and stop the measurement of the second cell, thereby reducing the measurement of cells that do not need to be measured by the UE. Therefore, the power consumption due to ineffective measurement of the second cell can be reduced and the standby time of the UE is extended.

In some embodiments, the measurement configuration further includes: a second configuration.

The second configuration may include a cell list. The cell list includes cell IDs of the plurality of first cells. The first cell may include a cell where the UE resides currently and/or a neighbor cell of the cell where the UE resides currently.

As illustrated in FIG. 5, a cell measurement configuration processing method is provided in the embodiment of the disclosure. The method includes the following steps.

S310, a cell ID of a second cell is received.

S320, an updated second configuration of a UE is sent to the UE according to the cell ID, in which the second configuration includes a cell list, the cell list includes updated first cells.

The cell measurement configuration processing method in the embodiment of the disclosure may be implemented independently or in combination with the aforementioned cell measurement configuration processing method performed by the base station.

Therefore, in some embodiments, the first configuration in the foregoing embodiments may be pre-determined, for example, specified by a communication protocol or determined by the UE itself. In this case, the base station may be not necessary to issue the first configuration.

Certainly, in some embodiments of the disclosure, the first configuration may be issued by the base station.

In conclusion, the UE may determine the second cell according to the first configuration.

After receiving the cell ID of the second cell, the base station may determine that an update condition of the first cells is satisfied, and then update the first cells of the UE according to the cell ID. The first cell is indicated by the second configuration, therefore the base station sends the updated second configuration to the UE.

In some embodiments, the cell ID of the second cell reported by the UE is not included in the cell list carried by the updated second configuration.

In some embodiments, the base station may exchange information with other base stations. If a certain second cell reported by the UE is determined by the UE as the second cell due to suspension of operation of the cell or other situations, the base station determines whether or not the updated first cells contains the second cell reported by the UE according to the cell ID of the second cell reported by the UE and the exchanged information among the base stations. For example, if a cell is mistakenly determined as the second cell by the UE due to situations such as its own suspension of operation or a change in reference signal transmission configuration, the second cell is included in the updated first cells.

In some embodiments, the second configuration issued by the base station separately may be issued via a RRC signaling, a MAC CE or DCI. For example, by sending the separate second configuration via the MAC CE or DCI, the UE is allowed to receive the updated second configuration and determine the updated first cells in time.

The embodiment of the disclosure provides a mobility scenario of evaluating whether the UE is far away from a cell to be measured, and the corresponding list of cells to be measured for mobility measurement is updated according to the reported cell IDs of the cells that do not need to be measured, which improves the mobility management performance and the effect of saving power consumption of the UE. The cells to be measured here is the first cells as described above.

For example, in order to facilitate the description, description is made in the form of steps, the actual order does not have to be exactly as the aforementioned order. The method provided by the embodiments of the disclosure may be as following.

At step 1, a network of a base station configures mobility measurement via an RRC signaling. The measurement configuration indicates some or all of the following items: a cell list of cells to be measured, a report threshold value of a measurement result, a non-measurement threshold value and a non-measurement timer.

At step 2, a UE performs the mobility measurement based on the measurement configuration in the step 1. When the UE measures the ith cell, if the measured RSRP, RSRQ, or RS-SINR is less than the non-measurement threshold value, and each of the L consecutive measurement values is less than a corresponding previous measurement value, it is determined that the UE is moving away from the cell and the non-measurement timer starts timing, and the UE may not need to measure the cell during a time period of the non-measurement timer.

At step 3, the UE reports a cell ID of the cell that does not need to be measured, and the base station updates the cell list of the cells to be measured according to the received cell ID of the cell that does not need to be measured. The cell that does not need to be measured is one of the aforementioned second cells.

At step 4, the UE reports a measurement result of the measured RSRP/RSRQ/RS-SINR value greater than the report threshold value and the corresponding cell ID.

The embodiment of the disclosure provides a mobility scenario of evaluating whether the UE is far away from a cell to be measured, and the corresponding list of cells to be measured for the mobility measurement is updated according to the reported cell IDs of the cells that do not need to be measured, which improves the mobility management performance and the effect of saving power consumption of the UE.

The non-measurement threshold value and its non-measurement timer are configured.

The UE determines whether it is moving away from the cell to be measured and stops the measurement of a cell to be measured that the UE is moving away from, to reduce unnecessary invalid measurements.

The UE reports the cell IDs of the cells that do not need to be measured, and the base station updates the list of cells to be measured.

As illustrated in FIG. 6, the embodiment of the disclosure provides a cell measurement apparatus. The apparatus includes:
a determining module 110, configured to determine a second cell from a plurality of first cells, in which the plurality of first cells are cells to be measured for a UE to perform mobility management; and
a stopping module, configured to stop measurement of the second cell.

In some embodiments, the determining module 110 and the stopping module may include but are not limited to, a program module. When the program module is executed by a processor, the processor can select the second cell from the first cells and stop the measurement of the second cell.

In some embodiments, the determining module 110 and the stopping module may include but are not limited to, a hardware and software combination module. The hardware and software combination module may include various programmable arrays. The programmable arrays may include a field programmable array and/or a complex programmable array.

In some embodiments, the determining module 110 and the stopping module may include but are not limited to, a pure hardware module. The pure hardware module includes an application specific integrated circuit.

In some embodiments, the determining module 110 is configured to execute at least one of:
selecting the second cell from the plurality of first cells according to L consecutive reference signal measurement values of each first cell, in which L is a positive integer; or
selecting a first cell having a distance with the UE greater than a distance threshold value as the second cell, according to location information of the plurality of first cells and location information of the UE.

In some embodiments, the determining module 110 is configured to execute at least one of:
determining a first cell whose L consecutive reference signal measurement values are all less than a non-measurement threshold value as the second cell; or
determining a first cell whose reference signal measurement value obtained by a latest measurement in the L consecutive reference signal measurement values is less than the non-measurement threshold value and whose L consecutive reference signal measurement values show a descending trend as the second cell.

It is understood that the apparatus further includes:
a first reporting module, configured to report a cell ID of the second cell, in which the cell ID of the second cell is configured to trigger a base station to update the first cells of the UE.

It is understood that the stopping module is configured to stop the measurement of the second cell within a timing range of a non-measurement timer.

It is understood that the apparatus further includes:
a restoring module, configured to determine that the non-measurement timer has expired and no updated first cell is received, and restore the measurement of the second cell.

It is understood that the apparatus further includes:
a second reporting module, configured to report a measurement result and a cell ID of a first cell whose reference signal measurement value is greater than or equal to a report threshold value, in which the report threshold value is greater than the non-measurement threshold value.

It is understood that the apparatus further includes:
a first receiving module, configured to receive a measurement configuration, in which the measurement configuration at least includes: a first configuration.

The first configuration includes: a threshold configuration and/or a timing configuration, in which the threshold configuration is configured to determine the second cell, and the timing configuration is configured to determine a time period during which the measurement of the second cell is stopped.

In some embodiments, the threshold configuration indicates the non-measurement threshold value and/or the distance threshold value for determining the second cell; and

the timing configuration indicates timing information of the non-measurement timer, in which the UE stops the measurement of the second cell during a timing period of the non-measurement timer.

In some embodiments, the measurement configuration further includes: a second configuration.

The second configuration includes a cell list, and the cell list includes cell IDs of the plurality of first cells.

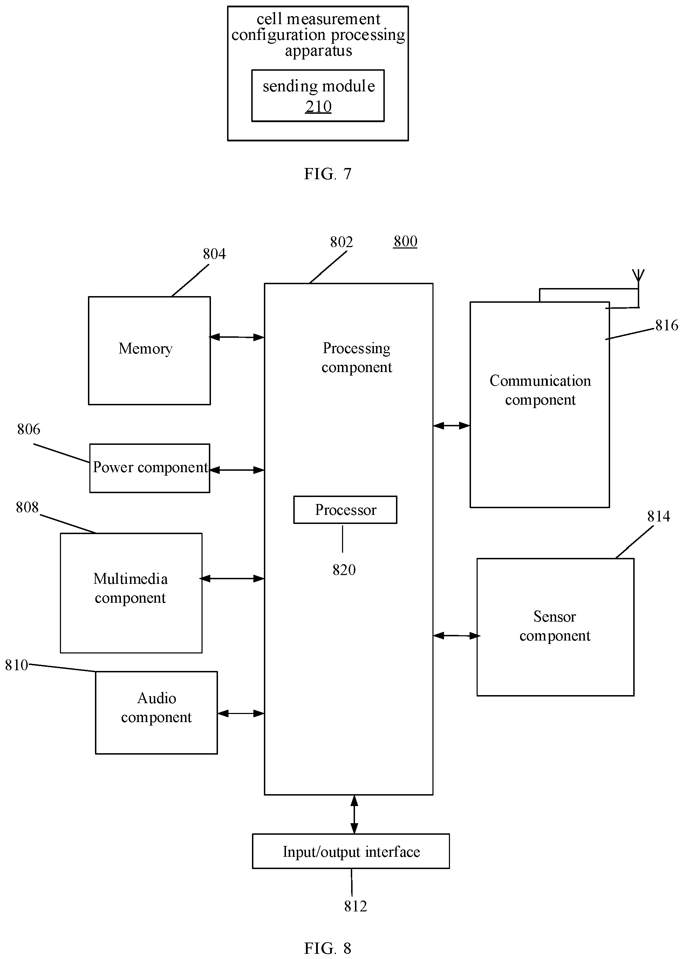

As illustrated in FIG. 7, the embodiment of the disclosure provides a cell measurement configuration processing apparatus. The apparatus includes:
a sending module 210, configured to send a measurement configuration, in which the measurement configuration is used for cell measurement of mobility management of a UE.

The measurement configuration at least includes a first configuration;
The first configuration includes: a threshold configuration and/or a timing configuration. The threshold configuration is used for the UE to determine a second cell whose measurement is to be stopped from a plurality of first cells, and the plurality of first cells are cells to be measured for the UE to perform the mobility management; and
The timing configuration is used to determine a time period during which the measurement of the second cell is stopped.

In some embodiments, the sending module 210 may include but is not limited to, a program module. When the program module is executed by a processor, it sends the measurement configuration including the first configuration to the UE.

In some embodiments, the sending module 210 may include but is not limited to, a hardware and software combination module. The hardware and software combination module includes various programmable arrays. The programmable arrays include a field programmable array and/or a complex programmable array.

In some embodiments, the sending module 210 may include but is not limited to, a pure hardware module. The pure hardware module includes an application specific integrated circuit.

It is understood that the apparatus further includes:
a second receiving module, configured to receive a cell ID of the second cell.

The sending module 210 is configured to send an updated second configuration of the UE to the UE according to the cell ID, in which the second configuration includes a cell list, the cell list includes updated first cells.

The embodiment of the disclosure provides a communication device, including:
a memory for storing processor-executable instructions;
a processor, connected to the memory.

The processor is configured to execute the terminal control method and/or the information processing method provided by any of the foregoing technical solutions.

The processor may include various types of storage mediums that are non-transitory computer storage mediums capable of continuing to memorize the information stored thereon after the communication device is powered down.

The communication device includes: an access device, a UE or a core network device.

The processor may be connected to the memory via a bus, for reading executable programs stored on the memory, e.g., at least one of the methods as shown in FIGS. 2 to 5.

FIG. 8 is a schematic diagram of a UE 800 according to an exemplary embodiment. For example, the UE 800 may be a mobile phone, a computer, a digital broadcasting UE, a message transceiver device, a game console, a tablet device, a medical device, a fitness device and a personal digital assistant.

As illustrated in FIG. 8, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communication, camera operations, and recording operations. The processing component 802 may include one or more processors 820 to execute instructions to implement all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each of the front-facing camera and the rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an exemplary embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In an exemplary embodiment, there is also provided a non-transitory computer readable storage medium including executable instructions, such as the memory 804. The above instructions may be executed by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

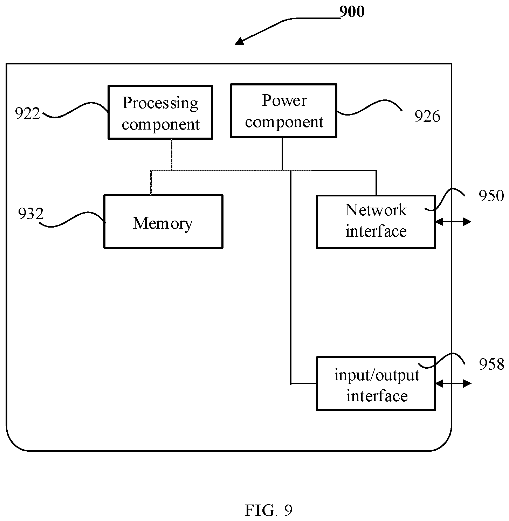

FIG. 9 is a schematic diagram of a base station 900 according to an exemplary embodiment. For example, the base station 900 may be provided as a network side device. The communication device may be an access device and/or a core network device as previously described.

As illustrated in FIG. 9, the base station 900 includes a processing component 922 consisting of one or more processors, and memory resources represented by a memory 932 for storing instructions that may be executed by the processing component 922, such as application programs. The application programs stored in the memory 932 may include one or more modules each corresponding to a set of instructions. In addition, the processing component 922 is configured to execute the instructions to perform any of the methods described above that are performed by the access device, for example, the methods shown in FIGS. 2-5.

The base station 900 may also include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM, or the like.

Other embodiments of the disclosure may be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and embodiments are considered as illustrative only, with a true scope and spirit of the disclosure being indicated by the following claims.

It may be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A cell measurement method, performed by a user equipment (UE), comprising:
determining a second cell from a plurality of first cells, wherein the plurality of first cells are cells to be measured for the UE to perform mobility management, the second cell being a cell selected from the plurality of first cells, wherein measurement of the second cell is to be stopped; and
stopping the measurement of the second cell.

2. The method of claim 1, wherein determining the second cell from the plurality of first cells comprises at least one of:
selecting the second cell from the plurality of first cells according to L consecutive reference signal measurement values of each first cell, wherein L is a positive integer; or
selecting a first cell having a distance with the UE greater than a distance threshold value as the second cell, according to location information of the plurality of first cells and location information of the UE.

3. The method of claim 2, wherein selecting the second cell from the plurality of first cells according to the L consecutive reference signal measurement values of each first cells comprises at least one of:
determining a first cell whose L consecutive reference signal measurement values are all less than a non-measurement threshold value as the second cell; or
determining a first cell whose reference signal measurement value obtained by a latest measurement is less than the non-measurement threshold value and whose L consecutive reference signal measurement values show a descending trend as the second cell.

4. The method of any one of claims 1-3, further comprising:
reporting a cell identification (ID) of the second cell, wherein the cell ID of the second cell is configured to trigger a base station to update the first cells of the UE.

5. The method of any one of claims 1-4, wherein stopping the measurement of the second cell comprises:
stopping the measurement of the second cell within a timing range of a non-measurement timer.

6. The method of claim 5, further comprising:
determining that the non-measurement timer has expired and no updated first cell is received, and restoring the measurement of the second cell.

7. The method of any one of claims 1-6, further comprising:
reporting a measurement result and a cell ID of a first cell whose reference signal measurement value is greater than or equal to a report threshold value, wherein the report threshold value is greater than the non-measurement threshold value.

8. The method of any one of claims 1 -7, further comprising:
receiving a measurement configuration, wherein the measurement configuration comprises a first configuration;
wherein the first configuration comprises: a threshold configuration and/or a timing configuration, wherein the threshold configuration is configured to determine the second cell, and the timing configuration is configured to determine a time period during which the measurement of the second cell is stopped.

9. The method of claim 8, wherein the threshold configuration indicates a non-measurement threshold value and/or a distance threshold value for determining the second cell; and
the timing configuration indicates timing information of a non-measurement timer, wherein the UE stops the measurement of the second cell during a timing period of the non-measurement timer.

10. The method of claim 8 or 9, wherein the measurement configuration further comprises: a second configuration;
wherein the second configuration comprises a cell list, and the cell list comprises cell IDs of the plurality of first cells.

11. A cell measurement configuration processing method, performed by a base station, comprising:
sending a measurement configuration, wherein the measurement configuration is used for cell measurement of mobility management of a user equipment (UE);
wherein the measurement configuration comprises a first configuration;
the first configuration comprises: a threshold configuration and/or a timing configuration, the threshold configuration is used for the UE to determine a second cell whose measurement is to be stopped from a plurality of first cells, and the plurality of first cells are cells to be measured for the UE to perform the mobility management; and
the timing configuration is configured to determine a time period during which the measurement of the second cell is stopped.

12. The method of claim 11, further comprising:
receiving a cell identification (ID) of the second cell; and
sending an updated second configuration of the UE to the UE according to the cell ID, wherein the second configuration comprises a cell list, the cell list comprises updated first cells.

13. A cell measurement apparatus, comprising:
a determining module, configured to determine a second cell from a plurality of first cells, wherein the plurality of first cells are cells to be measured for a user equipment (UE) to perform mobility management; and
a stopping module, configured to stop measurement of the second cell.

14. The apparatus of claim 13, wherein the determining module is configured to execute at least one of:
selecting the second cell from the plurality of first cells according to L consecutive reference signal measurement values of each first cell, wherein L is a positive integer; or
selecting a first cell having a distance with the UE greater than a distance threshold value as the second cell, according to location information of the plurality of first cells and location information of the UE.

15. The apparatus of claim 14, wherein the determining module is configured to execute at least one of:
determining a first cell whose L consecutive reference signal measurement values are all less than a non-measurement threshold value as the second cell; or
determining a first cell whose reference signal measurement value obtained by a latest measurement in the L consecutive reference signal measurement values is less than the non-measurement threshold value and whose L consecutive reference signal measurement values show a descending trend as the second cell.

16. The apparatus of any one of claims 13-15, further comprising:
a first reporting module, configured to report a cell identification (ID) of the second cell, wherein the cell ID of the second cell is configured to trigger a base station to update the first cells of the UE.

17. The apparatus of any one of claims 13 -16, wherein the stopping module is configured to stop the measurement of the second cell within a timing range of a non-measurement timer.

18. The apparatus of claim 17, further comprising:
a restoring module, configured to determine that the non-measurement timer has expired and no updated first cell being received, and restore the measurement of the second cell.

19. The apparatus of any one of claims 13-18, further comprising:
a second reporting module, configured to report a measurement result and a cell ID of a first cell whose reference signal measurement value is greater than or equal to a report threshold value, wherein the report threshold value is greater than the non-measurement threshold value.

20. The apparatus of any one of claims 13-19, further comprising:
a first receiving module, configured to receive a measurement configuration, wherein the measurement configuration comprises a first configuration;
wherein the first configuration comprises: a threshold configuration and/or a timing configuration, wherein the threshold configuration is configured to determine the second cell, and the timing configuration is configured to determine a time period during which the measurement of the second cell is stopped.

21. The apparatus of claim 9, wherein the threshold configuration indicates a non-measurement threshold value and/or a distance threshold value for determining the second cell; and
the timing configuration indicates timing information of a non-measurement timer, wherein the UE stops the measurement of the second cell during a timing period of the non-measurement timer.

22. The apparatus of claim 20 or 21, wherein the measurement configuration further comprises: a second configuration;
wherein the second configuration comprises a cell list, and the cell list comprises cell IDs of the plurality of first cells.

23. A cell measurement configuration processing apparatus, comprising:
a sending module, configured to send a measurement configuration, wherein the measurement configuration is used for cell measurement of mobility management of a user equipment (UE);
wherein the measurement configuration comprises a first configuration;
the first configuration comprises: a threshold configuration and/or a timing configuration, the threshold configuration is used for the UE to determine a second cell whose measurement is to be stopped from a plurality of first cells, and the plurality of first cells are cells to be measured for the UE to perform the mobility management; and
the timing configuration is configured to determine a time period during which the measurement of the second cell is stopped.

24. The apparatus of claim 23, further comprising:
a second receiving module, configured to receive a cell identification (ID) of the second cell;
wherein the sending module is configured to send an updated second configuration of the UE to the UE according to the cell ID, wherein the second configuration comprises a cell list, the cell list comprises updated first cells.

25. A communication device, comprising a processor, a transceiver, a memory and executable programs stored on the memory and executable by the processor, wherein when the executable programs are executed by the processor, the method of any one of claims 1-10, or the method of any one of claims 11-12 is implemented.

26. A computer storage medium having executable programs stored thereon, wherein when the executable programs are executed by a processor, the method of any one of claims 1-10, or the method of any one of claims 11-12 is implemented.
